# EUROPEAN PATENT APPLICATION

(11) **EP 3 210 668 A1**
(43) Date of publication of application: **30.08.2017**
(21) Application number: 16157623.6
(22) Date of filing: 26.02.2016
(51) Int. Cl.: B01J 37/10, B01J 37/12, B01J 23/72, B01J 35/00, B01J 37/00, C01B 3/32, B60L 11/00, C22C 9/00, B01J 37/02, B01J 35/04

(54) **COPPER-ZIRCONIUM-BASED METHANOL STEAM REFORMING CATALYST**

(71) Applicant: Universität Innsbruck, 6020 Innsbruck (AT); Technische Universität Chemnitz, 09111 Chemnitz (DE)
(72) Inventor: Klötzer, Bernhard, 6020 Innsbruck (AT); Mayr, Lukas, 6162 Mutters (AT); Armbrüster, Marc, 09111 Chemnitz (DE); Penner, Simon, 6020 Innsbruck (AT)
(74) Representative: Schwarz & Partner Patentanwälte OG

(57) **Abstract**

Catalyst for methanol steam reforming, comprising a Cu₅₁Zr₁₄ coating, wherein said Cu₅₁Zr₁₄ coating is at least partially oxidized and/or hydroxylized.

## Description

The present invention relates to a catalyst and a pre-catalyst based on zirconium. The invention further relates to a methanol steam reformer. The invention also relates to a method for manufacturing a pre-catalyst and a catalyst. Finally, the invention relates to a Drive system, comprising an electric engine, a hydrogen fuel cell, a fuel tank and a reactor, wherein said fuel tank is in fluid connection with said reactor and said reactor is in fluid connection to said hydrogen fuel cell and said hydrogen fuel cell is in connection with said electric engine.

### Background of the invention

Copper-based catalysts are widely used for technical applications in methanol chemistry, with well-known examples of methanol synthesis from syngas with optimized CO/CO₂ ratio, hydrogenation/photo-reduction of CO₂ to produce "renewable" methanol, and methanol steam reforming (MSR) as the reversal of the synthesis reaction from CO₂. Controllable steering of product selectivity is an obvious key criterion for technical usage. For MSR the key targets are hence high CO₂ selectivity, low CO content and maximum H₂ yield in the reformate to realize the efficient on-board production of clean hydrogen in e.g. automotive applications. With respect to the catalytic function of ZrO₂ in methanol steam reforming, already the simple addition of ZrO₂ to the conventionally used Cu/ZnO catalysts allows for reducing the inherent drawback of purely ZnO-based catalysts, that is, the poor sintering stability. Beneficial synergistic effects for methanol synthesis have also been described for Cu/Zn and the ternary Cu/Zn/Al system prepared by a co-precipitation technique.

Synergistic Cu-ZrO₂ interactions have also been reported for Cu/ZrO₂ catalysts without ZnO, involving Cu-O-Zr bonds at the phase boundary, which are believed to play a crucial role in steering the methanol reforming reaction to maximum CO₂ selectivity. Specifically, a nanocrystalline Cu/ZrO₂ catalyst synthesized by a polymer templating technique (Purnama, H., et al., Activity and selectivity of a nanostructured CuO/ZrO2 catalyst in the steam reforming of methanol. Catalysis Letters, 2004. 94(1-2): p. 61-68) was reported to be more active, selective and stable in MSR than the technical Cu/ZnO/Al₂O₃ methanol synthesis catalyst. Although a beneficial effect of the redox chemistry of Cu and the Cu⁰/Cu_{oxidized} ratio at the interface is put forward as an important selectivity descriptor, alongside disorder and strain phenomena within the metallic Cu phase, contradicting influence has also been reported. Both beneficial and adverse effects of the reducibility of Cu are know from the state of the art.

### Summary of the invention

The object of the present invention is to overcome the problems of the previously studied O₂/air oxidation of Cu-Zr amorphous glassy alloys, whose activity and selectivity had to be enhanced by the deliberate additions of noble metals (e.g. Au or Pd), further complicating the elucidation of the active and selective state.

This object is solved by a pre-catalyst for methanol steam reforming, comprising a monolithic carrier, preferably a monolithic metal carrier, with a Cu₅₁Zr₁₄ coating. While Cu₅₁Zr₁₄ itself shows poor methanol steam reforming behavior at the beginning of its use, it could be shown that during the process of methanol steam reforming the pre-catalyst turns into an excellent catalyst. The bimetallic Cu₅₁Zr₁₄ coating changes during methanol steam reforming in such a way that a catalytic surface with at least partially oxidized and/or hydroxylized Zr is formed.

Hence, this object is also solved by a catalyst for methanol steam reforming, comprising a monolithic carrier, preferably a monolithic metal carrier, with a Cu₅₁Zr₁₄ coating, wherein said Cu₅₁Zr₁₄ coating is at least partially oxidized and/or hydroxylized.

In a preferred embodiment the carrier comprises Cu, more preferably the carrier consists out of Cu.

If the carrier comprises or consists of Cu, it is preferred that the Cu is face-centred cubic.

The at least partially oxidized coating preferably comprises ZrO₂.

In one embodiment the at least partially oxidized coating comprises metallic Cu and ZrO₂ and/or ZrOₓH_{y}.

It has been shown that an activated catalyst may further be characterized in that the at least partially oxidized Cu₅₁Zr₁₄ coating comprises regions that consist of essentially spherical metallic Cu wherein ZrO₂ is dispersed in between the spherical metallic Cu. Basically there are Cu spheres with or without metallic Cu-interconnection. In between the copper spheres there are oxides and hydroxides of Zr, mainly ZrO₂ sticking the copper spheres together. Furthermore, there are pores and channels in the regions with high concentrations of oxides and hydroxides of Zr.

It is preferred that the essentially spherical metallic Cu has a diameter of between 25nm and 200 nm, preferably between 50 and 150 nm.

The invention further relates to a method for manufacturing a pre-catalyst characterized in that metallic Cu, preferably a Cu-foil and metallic Zr, preferably a Zr-foil, are placed in a melting pot, wherein the atomic ratio Cu:Zr > 1, in the absence of oxygen, preferably under vacuum conditions, is heated to < 1500 K, preferably to < 1400 K, most preferably to around 1370 K. It is beneficial that deposition of Cu₅₁Zr₁₄ occurs near the eutectic of Zr and Cu.

The catalyst can be formed by activating Cu₅₁Zr₁₄ preferably under methanol steam reforming conditions.

Preferably the catalyst and the pre-catalyst are free of Ta.

Hence, the invention further relates to a methanol steam reformer, comprising a catalyst or a pre-catalyst according to the invention.

Furthermore the invention relates to a microreactor comprising such a catalyst.

The pre-catalyst comprises a continuous Cu₅₁Zr₁₄ layer on top of a carrier whereas the catalyst comprises the oxidized Cu₅₁Zr₁₄ continuous layer on top of the carrier. In contrast to powder catalysts this has the advantage that it can be manufactured more easily and has technical benefits in operation (e.g. fast response to load changes).

The carrier is monolithic, which itself can be deposited on a subcarrier.

Carrier or subcarrier can be or comprise extruded material with pores and channels in order to increase the surface.

The invention further relates to a drive system, comprising an electric engine, a hydrogen fuel cell, a fuel tank; and a reactor, wherein said fuel tank is in fluid connection with said reactor and said reactor is in fluid connection to said hydrogen fuel cell and said hydrogen fuel cell is in connection with said electric engine, characterized in that the reactor comprises a pre-catalyst or a catalyst as described above.

The fast response time of this catalyst in methanol steam reforming makes it suitable for it use as drive system in a vehicle such as a car.

Hence the invention also relates to a vehicle including such a drive system.

Due to load changes (e.g. acceleration of the engine) it is useful to have an additional energy reservoir that allows faster response due to load change.

Such an energy reservoir may either comprise a hydrogen gas reservoir in fluid connection with said reactor and said fuel cell comprise an electrical energy storage unit or both. In a phase of low load the methanol steam reformer may produce either H₂ that is stored in the hydrogen gas reservoir or electric energy may be stored in an electrical energy store unit such as a battery.

Though the catalytic conversion with the presented catalyst from MeOH and H₂O to H₂/CO₂ is nearly stoichiometric, a small fraction of CO might still be present in the gas. Hence, the hydrogen fuel cell mentioned above should preferably have a tolerability for at least a low content of CO or comprise a CO adsorption unit.

It has been found that a bimetallic Cu₅₁Zr₁₄ pre-catalyst for hydrogen generation from methanol and water is activated *in situ* and yields very high CO₂-selectivity (>99.9 %) and a high H₂ yield. With respect to the geometric surface area a model surface showed more than one order of magnitude higher TOF values in comparision to supported Cu-ZrO₂ and Cu-ZnO₂-ZrO₂ reference catalysts. Evolution of structural activation monitored by X-ray diffraction (XRD), X-ray photoelectron spectroscopy (XPS) and electron microscopy indicates transformation of the bimetallic Cu/Cu₅₁Zr₁₄ pre-catalyst into an active and selective state with coexistence of crystalline Cu and partially hydroxylated tetragonal ZrO₂. The outstanding performance is assigned to the presence of a high interface concentration following in situ oxidative decomposition of the intermetallic compound. These active sites are described by a teamwork of Cu, responsible for methanol activation, and tetragonal ZrO₂, responsible for water activation via surface hydroxylation.

Such Cu-Zr alloys as pre-catalysts, and their subsequent activation under reaction conditions, have also been studied in CO₂ hydrogenation, in partial oxidation of alcohols and in ternary systems with rare earth components for methanol synthesis. The concept of *in situ* oxidation of Zr⁰ under MSR conditions, reported previously, is now promoted to its optimum in the present invention. The surprisingly high activity and extremely high selectivity of a bimetallic Cu/Cu₅₁Zr₁₄ pre-catalyst, in situ decomposed via contact to the MSR reaction mixture, thereby adjusting the resulting Cu-ZrO₂ interface capable of opening the proper reaction channels is exemplified.

Selectivity control is realized via suppression of full dehydrogenation of methanol to CO and subsequent promotion of total oxidation of intermediate oxygenates such as HCHO to CO₂ by water. With the new preparation/activation technique, the activity was scaled up to achieve a ∼100 times higher CO₂ formation rate (with constant catalyst size) in comparison to L. Mayr, B. Klötzer, D. Zemlyanov, S. Penner, J. Catal. 2015, 321, 123-132 and ∼3 times higher than at a Cu/ZnO catalyst studied under identical conditions (C. Rameshan, W. Stadlmayr, S. Penner, H. Lorenz, N. Memmel, M. Hävecker, R. Blume, D. Teschner, T. Rocha, D. Zemlyanov, A. Knop-Gericke, R. Schlögl, B. Klötzer, Angew. Chem. 2012, 124, 3057-3061).

A low activation energy of approx. 100 kJ/mol was determined by Arrhenius analysis, with a reaction onset temperature of approx. 470 K. In comparison, the onset temperature of CuZn is approx. 530 K with a similar activation energy. ZnPd showed an equally high reaction onset temperature at approx. 540 K with a slightly higher activation energy of 116 kJ/mol Application-wise, the presented preparation technique is perfectly suitable for catalytic coatings (e.g. initially bimetallic coating of ceramic monoliths for micro-reactors/-reformers) where it automatically forms a highly active, highly selective and very stable high-surface-area state by "selective corrosion" under MSR reaction conditions.

Nevertheless, any influence appears strongly connected to the quantity and quality of the, especially *in situ* formed, Cu-ZrO₂ interface. This is important as also the oxidic constituents of the catalyst may synergistically participate in the reaction, either by stabilizing oxygenate intermediates or by directly activating water. The latter has already been identified on Pd-ZnO and Cu-ZnO as the most important step in CO₂-selective steam reforming.

An estimated turnover frequency of 18 CO₂ molecules site⁻¹ s⁻¹ was calculated by taking into account the geometric surface area of the catalyst (3.6 cm²; with an average surface atom density of 1.7x10¹⁵ Cu atoms cm⁻²). The actual surface area after the catalyst activation is significantly higher and the calculated TOF consequently accordingly lower. TOFs reported by Breen and Ross on comparable (co-)precipitated Cu/Zr/Zn systems are significantly lower (∼0.5 H₂ molecules site⁻¹ s⁻¹).

Further details are shown in the Figures and their legends.
Figure 1 shows: XRD patterns of the Cu-Zr catalyst before and after *in situ* activation under MSR conditions. The metallic pre-catalyst state (intermetallic Cu₅₁Zr₁₄ and elemental Cu) changes into a mixture of Cu and oxidized/hydroxylated Zr (cf. Figure 4). Tetragonal ZrO₂ appears after contact to the MSR reaction mixture. Calculated pattern are shown as bars.
Figure 2 shows: Methanol Steam Reforming on the initial Cu/Cu₅₁Zr₁₄ catalyst. Panels a)-d) are showing four subsequent runs on the same starting material. Note that the decrease of CO₂ formation rate during the isothermal reaction is due to progressive reactant consumption (methanol conversion after 60 min ∼100% for panel d).

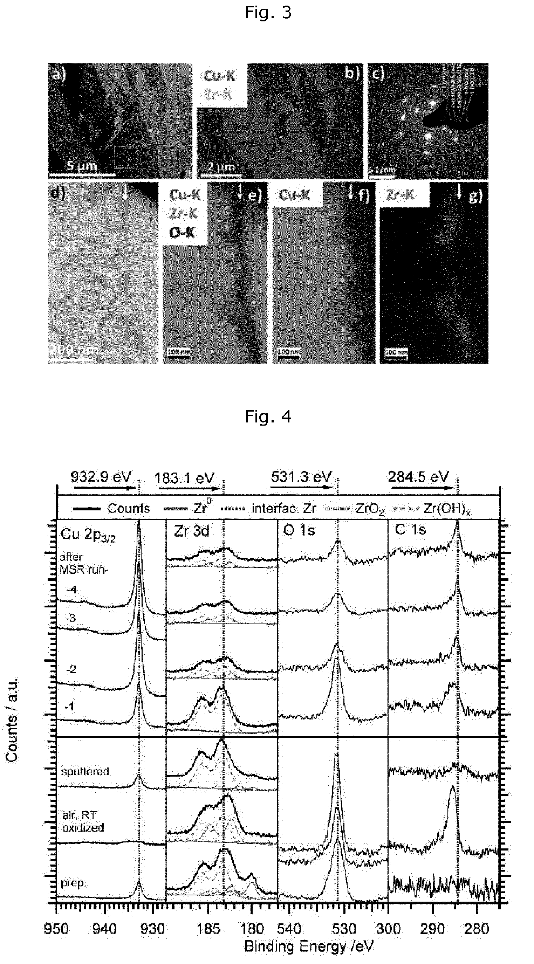

Figure 3 shows: Morphology of the CO₂-selective state of the decomposed Cu/Cu₅₁Zr₁₄ pre-catalyst after contact to the MSR reaction mixture up to 623 K. a) bright-field TEM image of a FIB-cut layer perpendicular to the surface, b) corresponding EDX map of the same region using the Cu-K and Zr-K intensities, c) selected area electron diffraction of a Zr-rich region (taken from the indicated square in a)). Panels d)-g) highlight the morphology (d) and the elemental distribution (e-g) of the surface region. The surface is indicated by a white arrow. The blue and green intensities in Panels b) and e) are due to Pt from the FIB process.
Figure 4 shows: *Ex situ* XP spectra of the Cu/Cu₅₁Zr₁₄ pre-catalyst before and after each MSR run in the batch reactor (reaction time per run ∼ 1 h) until full activation of the catalyst.
Figure 5 shows: Morphology of the bimetallic Cu/Cu₅₁Zr₁₄ pre-catalyst. a) Bright-field TEM image of a FIB-cut layer perpendicular to the surface of a single whisker, b) and c) corresponding EDX maps using the Cu-K and Zr-K intensity to highlight the spatial elemental distribution. The surface is denoted by a white arrow.
Figure 6 shows: EDX maps of the C-K (left) and O-K intensity (right) of the region shown in Figure S1 for the Cu/Cu₅₁Zr₁₄ precursor.
Figure 7 shows: Structural state of the bimetallic Cu/Cu₅₁Zr₁₄ pre-catalyst. a) Bright-field TEM image of a FIB-cut layer perpendicular to the surface of a single whisker (left), corresponding EDX maps using the Cu-K (green), Zr-K (red) and O-K (blue) intensity to highlight the spatial elemental distribution.
Figure 8 shows: Bright-field image of a FIB-cut layer of the CO₂-selective state of the Cu/Cu₅₁Zr₁₄ catalyst after the MSR reaction.
Figure 9 shows: Bright-field image of a detail of the Cu-enriched regions at the surface after contact to the MSR reaction mixture with two elongated Zr-enriched regions (as deduced from EDX, red encircled region of Figure S4).
Figure 10 shows: Bright-field image of the fine-crystalline Cu-enriched regions (left above) and selected area electron diffraction pattern (below) taken at the spot indicated by the aperture highlighted in the right above panel.
Figure 11 shows: Structural state of the CO₂-selective state of the decomposed initial bimetallic Cu/Cu₅₁Zr₁₄ pre-catalyst after contact to the MSR reaction mixture up to 623 K. Bright-field TEM image of a FIB-cut layer perpendicular to the surface (above), corresponding EDX maps of the same region using the Cu-K (green), O-K (light green) and Zr-K (red) intensities (middle and lower panel).
Figure 12 shows: Detailed EDX analysis of the region shown in Figure S7 with quantification of the Cu- and the Zr-rich regions. The not assigned signals in the above EDX spectrum correspond to Fe and Co from the pole piece (at 6.5 eV and 7 eV due to backscattered electrons) and the one at 1.5 eV is a sum peak of O and Zr.
Figure 13 shows: Catalysis data for run 1 a), run 2 b), run 3 c) for a Cu/Zr catalyst in the initial ratio Cu:Zr = 9:2 and run 1 as well as run 3 for a initial ratio Cu:Zr = 1:2 d) and e).
Figure 14 shows: Optical micrographs of the bimetallic Cu/Cu51Zr14 pre-cursor before (A) and after (B) contact to the catalytic MSR reaction mixture. The metallic gloss is lost after MSR due to the formation of sponge-like disperse Cu.
Figure 15 shows: SEM images of the bimetallic Cu/Cu₅₁Zr₁₄ pre-cursor, directly revealing the whisker-like features.
Figure 16 shows: schematically a drive system according to the invention.

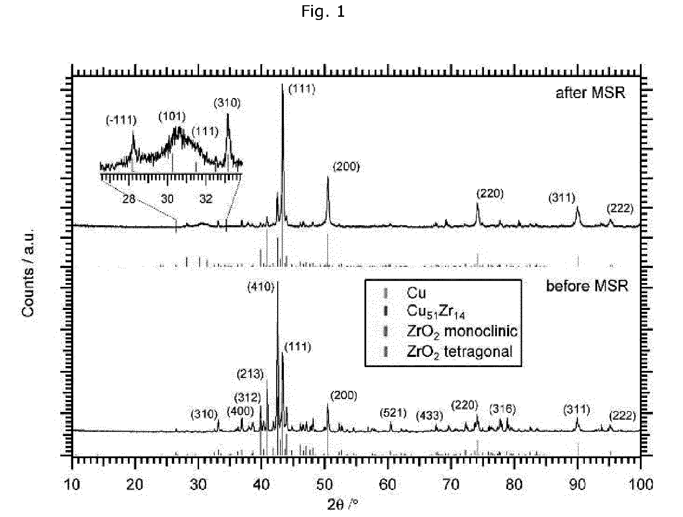

According to XRD analysis after synthesis, the material consists of a mixture of elemental copper (28(1) vol-%) and 72(1) vol-% of the intermetallic compound Cu₅₁Zr₁₄ (Ag₅₁Gd₁₄ type structure, space group *P6*/*m, hP68*^{[16]}). The XRD experiments clearly point out the difference to the amorphous Cu-Zr alloy precursors as reported previously (Figure 1).

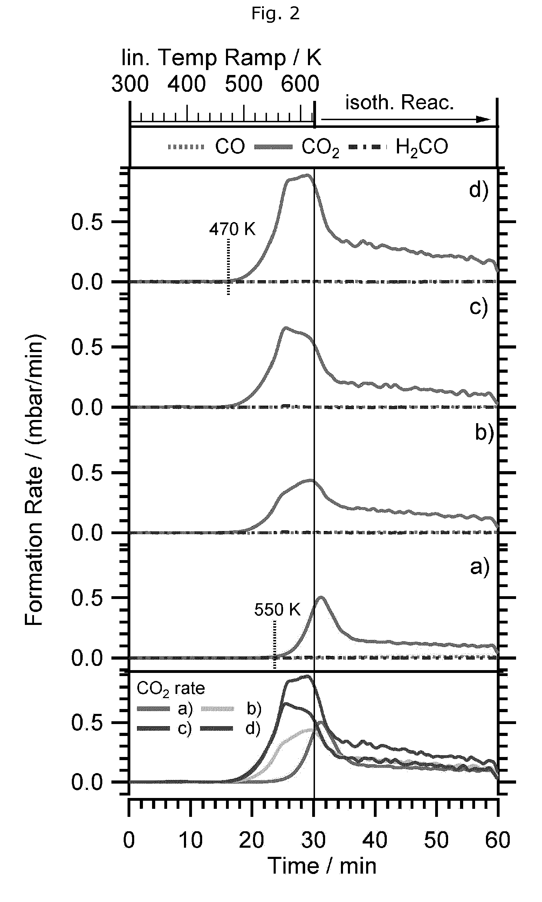

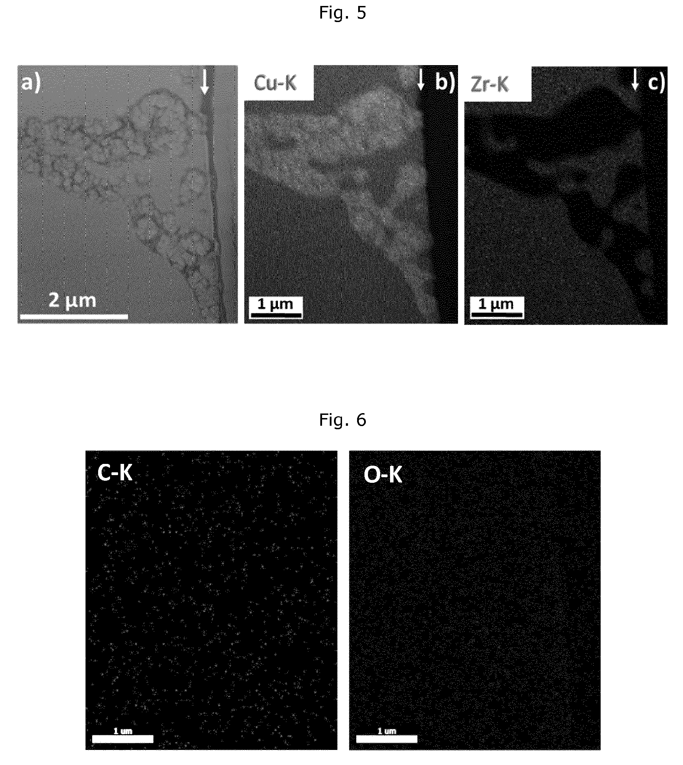

According to the prior art, amorphous alloys are usually decomposed in oxygen or air for several hours. The resulting powder catalyst exhibits rather poor selectivity and activity. Instead of full oxidative decomposition, the Cu/Cu₅₁Zr₁₄ pre-catalyst catalyst is successively activated under methanol steam reforming conditions. According to Figure 2, the maximum formation rate of CO₂ increases and the onset temperature for CO₂ formation decreases by running four identical catalytic MSR cycles (Fig. 2, panels a-d and Fig. 5). As shown in Figures 1, 3 and 4, activation is morphologically characterized by oxidative segregation as a consequence of decomposition of the intermetallic compound Cu₅₁Zr₁₄ and subsequent (partial) Zr surface hydroxylation (Zr 3d BE 183.1 eV). Oxidation of the intermetallic compound thus occurs without passivating the surface with ZrO₂. The direct comparison to the Cu/Zn system catalytically characterized in the same experimental setup reveals that the activity of the reaction-induced Cu-Zr material is much more stable and no oxidative/thermal Cu sintering was observed. Moreover, a CO₂-formation rate of ∼0.9 mbar min⁻¹ was detected, even though the surface of the sample was less than half the size of the Cu-Zn sample (C. Rameshan, W. Stadlmayr, S. Penner, H. Lorenz, N. Memmel, M. Hävecker, R. Blume, D. Teschner, T. Rocha, D. Zemlyanov, A. Knop-Gericke, R. Schlögl, B. Klötzer, Angew. Chem. 2012, 124, 3057-3061).

Normalized to the sample area (using identical Cu substrates), the formation rates of CO₂ and hydrogen both increased by a factor of 3 for Cu-Zr. For high purity Cu (polycrystalline 99.999 % Cu-foil) negligible formation rates of CO, CO₂ and formaldehyde are observed in our reactor setup. As expected, high purity bulk Cu is a poor (de)hydrogenation catalyst, which is likely due to its limited hydrogen desorption/adsorption properties, and is, moreover, hardly capable of water activation, being the necessary precondition for total oxidation of intermediate oxygenates toward CO₂. For less pure Cu (99.95 %), minor formaldehyde formation rates can be detected (1x10⁻² mbar min⁻¹), however, water activation is not possible and in consequence, no CO₂ is formed. A ZrO₂ layer on Zr foil is also not active for MSR.

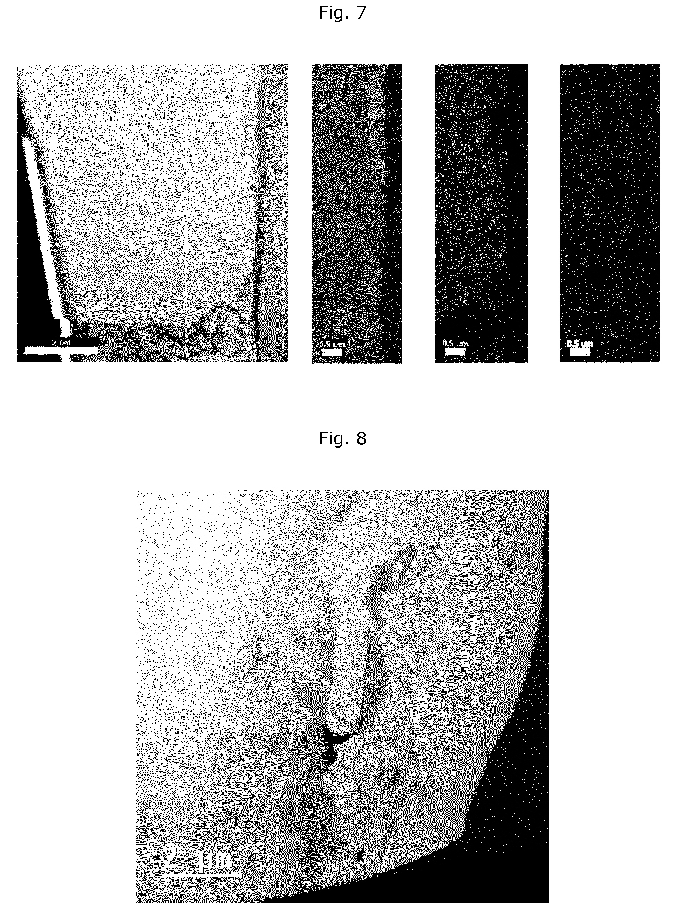

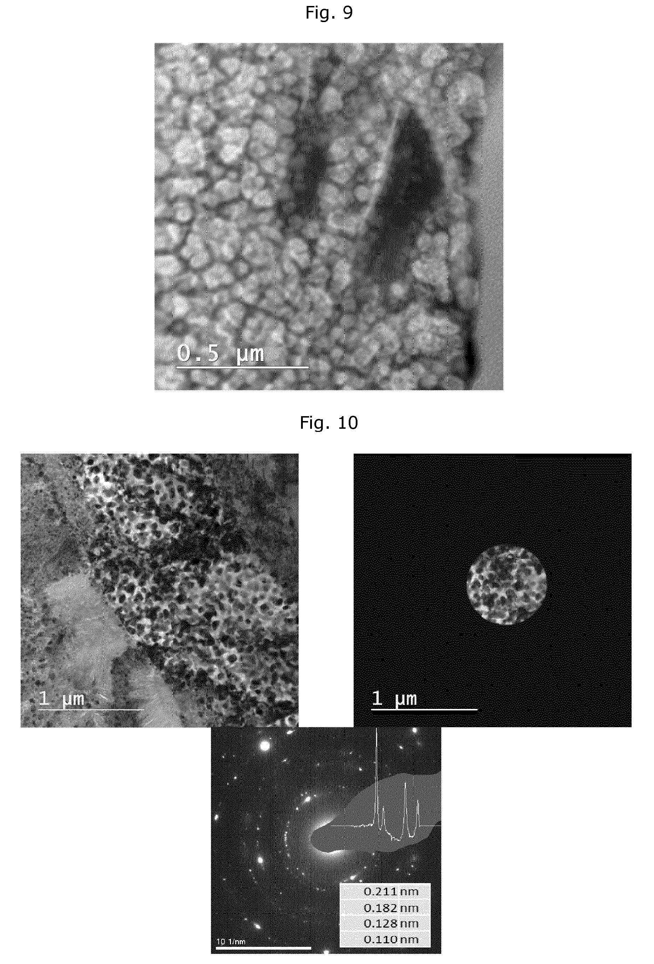

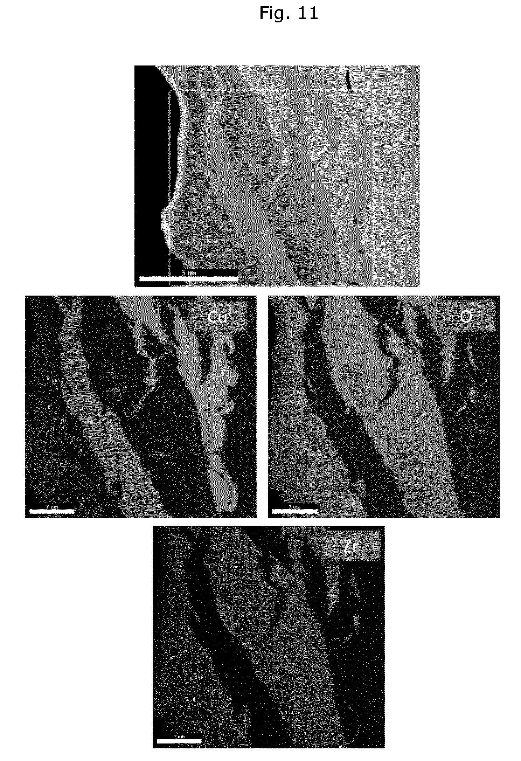

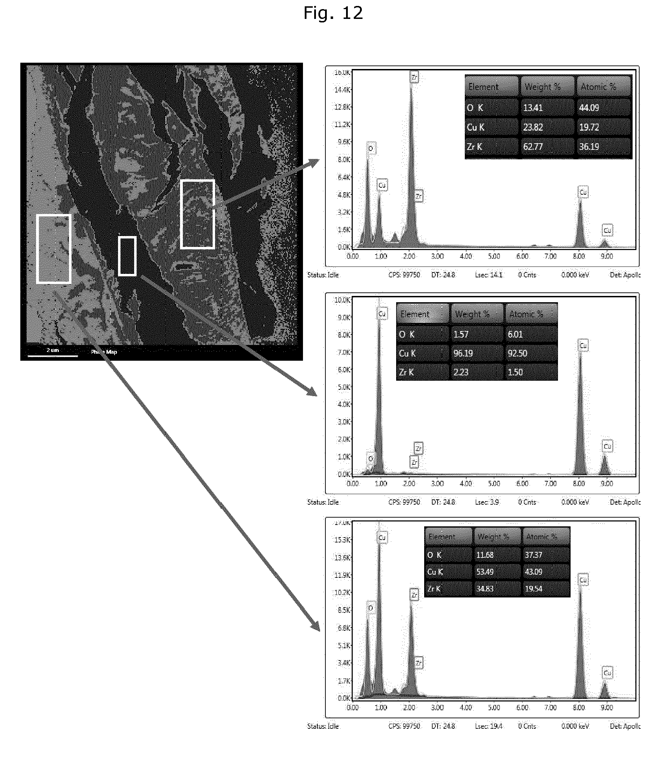

According to quantitative XRD experiments, the self-activating and self-stabilizing state is characterized by in situ oxidative decomposition of Cu₅₁Zr₁₄ (24(1) vol-%) in favor of the formation of elemental Cu (69(1) vol-%) and oxidized Zr: new peaks arise due to the presence of tetragonal ZrO₂ and monoclinic ZrO₂. The former is characterized by the relatively broad peak at a 2θ=30.5° (green bars in Figure 1). Note that XPS experiments (Figure 4) also suggest a certain degree of Zr surface hydroxylation, which is plausible as water activation is extremely efficient on the catalyst and leads to both hydroxylation and an outstanding CO₂-selectivity. In contrast to the rather homogeneous structure present in the Cu/Cu₅₁Zr₁₄ pre-cursor (Figures 5 to 7), contact to the MSR reaction mixture at 623 K causes catalytically beneficial restructuring of both bulk and surface regions of the bimetallic Cu/Cu₅₁Zr₁₄ pre-cursor. The CO₂-selective state is characterized by a very inhomogeneous composite structure of Cu-rich (bright in Figure 3a) and Zr-rich (dark in Figure 3a) regions. While the Cu-rich regions are still characterized by a distinct small-grain structure, the corresponding Zr-rich regions exhibit a characteristic lamellar structure, which appears locally enriched in Cu. This is also directly visible in the EDX map composed of the Cu-K and Zr-K intensities (panel b). The catalytically relevant, gas-exposed surface regions are shown in panels d)-g). Although the bright-field image (d) indicates that mostly Cu is extending to the surface, the EDX maps clearly reveal that both Cu (f) and Zr (g) are jointly found at the surface. In panel e), also the O-K intensity is shown within the overlayer, directly revealing that oxygen is mostly found at the locations of Zr, indicating that the surface contains metallic Cu and oxidized Zr in coexistence. Well-ordered oxidized Zr is mostly found in its tetragonal ZrO₂ modification (panel c, diffractogram taken from the square in the Zr-rich region indicated in panel a) and not predominantly in its thermodynamically more stable monoclinic polymorph. As a final conclusion, the most CO₂-selective state, as formed by in situ decomposition of the intermetallic compound Cu₅₁Zr₁₄ is composed of finely dispersed metallic Cu particles in coexistence with hydroxylated tetragonal ZrO₂. Additional information on the structure of the Cu-rich and Zr-rich regions, alongside further EDX mapping results, including quantification, Figures 8 to 12.

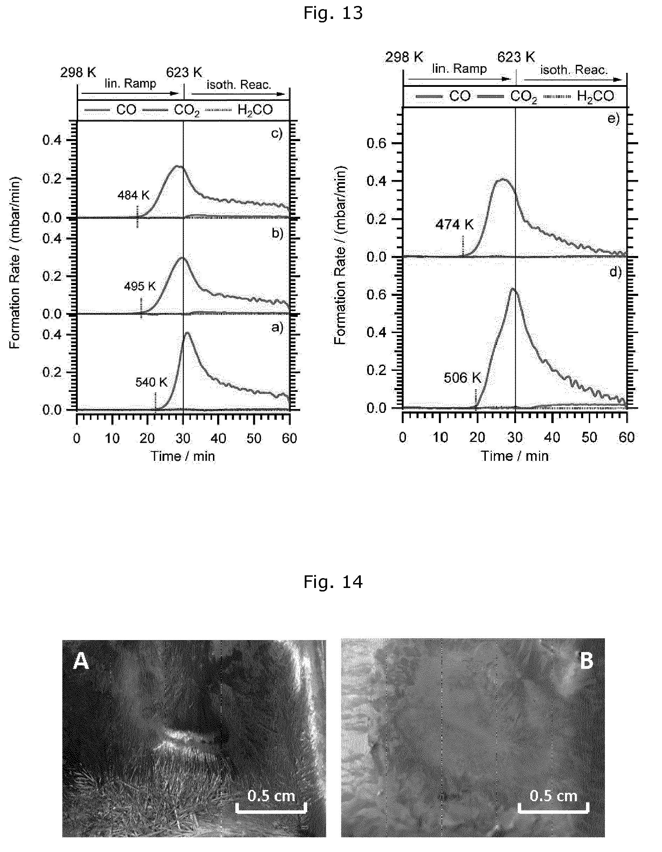

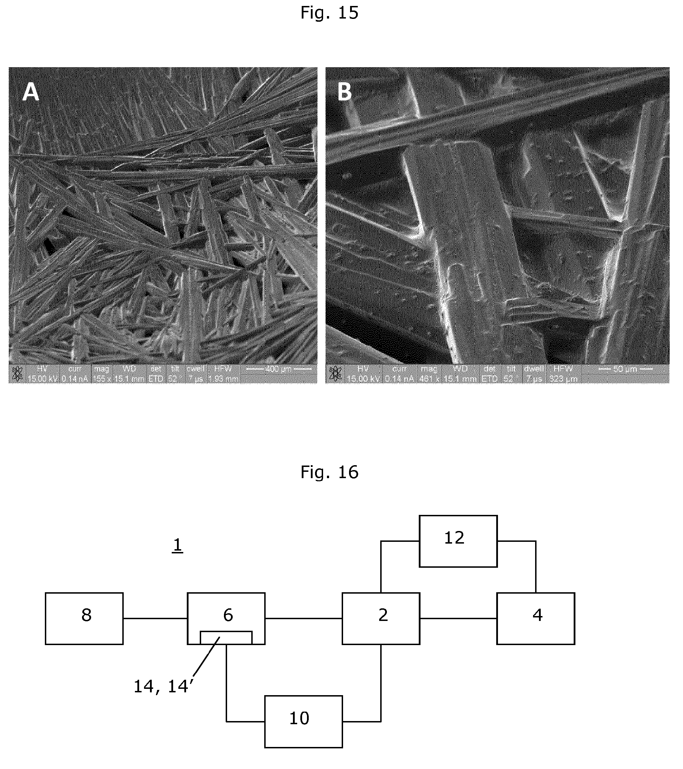

Already after preparation, the formation of a ZrO₂ enriched surface region is found, formed during transport in air from the preparation setup to the analysis cluster. This layer could be removed by short Ar-sputtering (not shown). However, longer exposure to air at room temperature leads to a completely oxidized film, as evidenced by the Zr 3d peak as seen in Figure 4. With short sputtering (to remove carbon), a trend towards (inter-)metallic Zr could again be found. The hypothesis of a ZrO₂ surface layer is corroborated by the XRD patterns after synthesis. With this bulk sensitive technique, only Cu and Cu₅₁Zr₁₄ are detected before reaction. After MSR reaction cycle 1-4, the Zr 3d binding energy remains constantly at 183.1 eV. This is an additional shift of +0.7 eV with respect to the BE of bulk ZrO₂ at 182.4 eVand assigned to (partial) hydroxylation. Minor carbon formation occurs, not increasing from MSR run 1 to run 4. The O is binding energy remains constant. Cu oxidation could not be observed as deduced from a constant Cu 2p_{3/2} binding energy, as well as the absence of a satellite peak at 944.0 eV. The activation of the catalyst can be followed by evaluating the relative signal intensities: in contrast to the surface-localized air oxidation effect, manifesting itself by a passivating ZrOₓH_{y} layer, "deep" corrosion under MSR conditions leads to a strong relative increase of the Cu Signal and an associated parallel decrease of the Zr 3d and O 1s signals, alongside a high degree of Zr hydroxylation (cf. also Figures 14 and 15).

This enhancement of the stability of metallic Cu directly at the surface is responsible for the progressive activation. At the same time, a high number of catalytically beneficial Cu-ZrO₂ interfacial sites is gained by a process resembling the initial stages of selective corrosion of Cu alloys such as brass.

The oxidative decomposition of the intermetallic compound Cu₅₁Zr₁₄ thus leads to a composite catalytic material with unprecedented properties, which in this form has not been obtained before. The use of intermetallic compounds in catalysis is thus not restricted to in situ stable compounds to enhance the knowledge of the ongoing processes, but they also can be applied to generate high-performance materials not accessible by other routes - either by decomposition or by reactive metal-support interaction.

We conclude that the outstanding methanol steam reforming properties of the Cu/Cu₅₁Zr₁₄ pre-catalyst, finally characterized by an in situ formed coexistence of disperse metallic Cu and (partially) hydroxylated tetragonal ZrO₂, arise due to the effective activation of water on the latter. Simultaneously, methanol activation takes place on Cu sites, increasing in number at the surface with activation of the catalyst. Cu sites even become enhanced on the surface after the initial stages of selective corrosion of the intermetallic compound Cu₅₁Zr₁₄. The latter through in situ activation creates an active, selective and stable Cu/tetragonal ZrO₂ interfacial coexistence at the surface. This in consequence leads to a very high number of beneficial interfacial sites bringing activated water and methanol species in the most efficient way together in close neighborhood at the same time resulting in very high activity and outstanding selectivity.

### Experimental Section

To prepare the catalyst pre-cursor, Cu foil (Goodfellow, purity: 99.95 %, thickness: 0.125 mm) and Zr foil (Alfa Aesar, purity: 99.95 %, thickness: 0.127 mm) where stacked in a Ta boat in the atomic ratio Cu:Zr = 2:1. This represents an empirical optimum ratio, although no upper limit for the Zr content in terms of forming a passivating and deactivating ZrO₂ layer covering the surface, potentially leading to a loss of Cu/ZrO₂ phase boundary was observed (for Cu:Zr=9:2 and 1:2). However, in practice the maximum content of Zr is limited by the completeness of the reaction between Cu and Zr. The sample holder boat is heated resistively under high vacuum conditions (base pressure ∼1x10⁻⁷ mbar) slightly above the melting temperature of Cu (1360 K), but far below the melting temperature of Zr (2130 K). At this temperature, solid Zr reacts with the molten Cu to form a uniform melt, whereas at the same time the evaporation of Cu is negligibly low. With corresponding higher Zr content (Cu:Zr < 2:1) this reaction is not complete and solid Zr remains. Reactivities for samples with higher and lower initial stoichiometries (Cu:Zr=9:2 Cu:Zr=1:2) reveal no selectivity differences (Figure 13), but lower CO₂ formation rates compared to the optimum Cu:Zr=2:1 ratio. Cooling down to 300 K is performed within 30 min with a time-averaged cooling rate of ∼30 K/min. At 300 K, the HV chamber is vented and the catalyst transported in air to structural and spectroscopic characterization. Optical and electron micrographs of the catalyst before and after MSR are given in Figures 14 and 15. Temperature-programmed methanol steam reforming experiments were performed using an UHV-attached highpressure batch reactor with continuous MS detection. The following starting conditions were applied: 12 mbar methanol, 24 mbar water, 8 mbar Ar, 956 mbar He. Ar was used for correction of thermal expansion and pressure drop due to gas withdrawal through the capillary leak to the MS. The temperature program was adjusted to 10 K min⁻¹ temperature ramp up to 623 K and an isothermal period at 623 K for 30 min.

Fig. 16 shows a drive system 1, comprising an electric engine 4, a hydrogen fuel cell 2, a fuel tank 8, and a reactor 6. The fuel tank 8 comprises a methanol/water (MeOH/H₂O) mixture. It might be useful to have an additional vaporizer installed between fuel tank 8 and fuel cell 2 in order to have a gas stream of MeOH/H₂O passing over the catalyst 14' (or catalyst 14). Said fuel tank 8 is in fluid connection with said reactor 6 and said reactor 6 is in fluid connection to said hydrogen fuel cell 2. Said hydrogen fuel cell 2 furthermore is in connection with said electric engine 4. The reactor 6 comprises the pre-catalyst 14 according to the invention and is activated during its use or a catalyst 14' already activated.

Such a drive system might be included in a vehicle such as a car.

For response due to load changes there is an additional energy reservoir 10, 12 that allows faster response due to load change. One energy reservoir comprises a hydrogen gas reservoir 10 in fluid connection with said reactor 6. Another energy reservoir comprise an electrical energy storage 12 such as a battery.

## Claims

1. Pre-catalyst for methanol steam reforming, comprising a monolithic carrier, preferably a monolithic metal carrier, with a Cu₅₁Zr₁₄ coating.

2. Catalyst for methanol steam reforming, comprising a monolithic carrier, preferably a monolithic metal carrier, with a Cu₅₁Zr₁₄ coating, wherein said Cu₅₁Zr₁₄ coating is at least partially oxidized and/or hydroxylized.

3. Pre-catalyst according to claim 1 or catalyst according to claim 2, **characterized in that** the carrier comprises Cu.

4. Pre-catalyst according to claim 1 or catalyst according to claim 2, **characterized in that** the carrier consists out of Cu.

5. Pre-catalyst or catalyst according to claim 3 or 4, **characterized in that** the Cu is face-centred cubic.

6. Catalyst according to one of claims 2 to 5, **characterized in that** the at least partially oxidized coating comprises ZrO₂.

7. Catalyst according to one of claims 2 to 6, **characterized in that** the at least partially oxidized coating comprises metallic Cu and ZrO₂ and/or ZrOₓH_{y}.

8. Catalyst according to one of claims 2 to 7, **characterized in that** the at least partially oxidized Cu₅₁Zr₁₄ coating comprises regions that consist of essentially spherical metallic Cu wherein ZrO₂ is dispersed in between the spherical metallic Cu.

9. Catalyst according to claim 8, **characterized in that** the essentially spherical metallic Cu has a diameter of between 25nm and 200 nm, preferably between 50 and 150 nm.

10. Method for manufacturing a pre-catalyst according to one of claims 1 to 5 **characterized in that** metallic Cu, preferably a Cu-foil and metallic Zr, preferably a Zr-foil, are placed in a melting pot, wherein the atomic ratio Cu:Zr > 1, in the absence of oxygen, preferably under vacuum conditions, is heated to < 1500 K, preferably to < 1400 K, most preferably to around 1370 K.

11. Method for manufacturing a catalyst according to one of claims 2 to 9, **characterized in that** a pre-catalyst according to claim 1 or a pre-catalyst manufactured according to claim 6 is oxidized, preferably under methanol steam reforming conditions.

12. Methanol steam reformer, comprising a catalyst according to one of claims 2 to 9 or a pre-catalyst according to one of claims 1 to 5.

13. Drive system (1), comprising
• an electric engine (4),
• a hydrogen fuel cell (2),
• a fuel tank (8); and
• a reactor (6),
wherein said fuel tank (8) is in fluid connection with said reactor (6) and said reactor (6) is in fluid connection to said hydrogen fuel cell (2) and said hydrogen fuel cell is in connection with said electric engine (4), **characterized in that** the reactor (6) comprises a pre-catalyst (14) according to one of claims 1 to or a catalyst (14') according to one of claims 2 to

14. Drive system according to claim 13, **characterized by** an additional energy reservoir (10, 12)

15. Drive system according to claim 14, **characterized in that** the energy reservoir (10, 12) comprises a hydrogen gas reservoir (10) in fluid connection with said reactor (6) and said fuel cell (2) and/or **characterized in that** the energy reservoir (10, 12) comprises an electrical energy storage unit (12).
